**Europäisches Patentamt**

**European Patent Office**

**Office européen des brevets**

(11) Veröffentlichungsnummer: **0 104 363**

**A1**

(12)  **EUROPÄISCHE PATENTANMELDUNG**

(21) Anmeldenummer: 83107548.6

(22) Anmeldetag: 01.08.83

(51) Int. Cl.³: **B 60 T 15/04**

(30) Priorität: 27.08.82 DE 3231978

(43) Veröffentlichungstag der Anmeldung:
04.04.84  Patentblatt 84/14

(84) Benannte Vertragsstaaten:
AT BE DE FR IT NL SE

(71) Anmelder: Knorr-Bremse GmbH
Moosacher Strasse 80
D-8000 München 40(DE)

(72) Erfinder: Vollmer, Otto
Joergstrasse 31
D-8000 München 21(DE)

(54) **Druckregelventil, insbesondere Fussbremsventil für Kraftfahrzeuge.**

(57) Bei einem Druckregelventil, insbesondere Fußbremsventil für Kraftfahrzeuge, ist eine Federanordnung an dem zur Betätigung des Einlaß- und Auslaßventiles (19) des ersten Kreises dienenden Druckstück (3) vorgesehen; die Federanordnung besteht aus in Reihe angeordneten Stufungsfedern (7, 15), von welchen sich eine (7) radial außerhalb der zweiten (15) befindet und sich einerseits am Druckstück und andererseits an einen ringförmigen Kolben (9) abstützt, während die radial innere Stufungsfeder (Feder 15) unter Vorspannung sowohl an dem Kolben (9) als auch an einem innerhalb des Kolbens (9) geführten Hilfskolben (13) abgestützt ist. Der Hilfskolben (13) ist an einem Sicherungsring (47) oder dergleichen Anschlagelement des radial äußeren Kolbens (9) abgefangen. Bei einem Bruch der äußeren Stufungsfeder kommt das Druckstück nach einer vorbestimmten Wegstrecke in Anschlagposition mit dem Kolben, so daß die Funktionsfähigkeit des Einlaß- und Auslaßventils weitgehend aufrechterhalten bleibt. In gleicher Weise gelangen der Hilfskolben und der Kolben bei einem Bruch der inneren Stufungsfeder in Anschlagposition, so daß die Funktionsfähigkeit des Einlaß- und Auslaßventils sichergestellt bleibt, d.h. der Begrenzungsdruck bleibt in beiden Fällen nahezu unverändert erhalten.

./...

EP 0 104 363 A1

Croydon Printing Company Ltd.

Fig.1

0104363

Knorr-Bremse GmbH        München, den 23.08.1982
Moosacher Str. 80           TP1-hn/fe
8000 München 40           - 1719 -

### Druckregelventil, insbesondere Fußbrems-ventil für Kraftfahrzeuge

Die Erfindung betrifft ein Druckregelventil nach dem Gattungsbegriff des Patentanspruches 1.

Bei bekannten Fußbremsventilen (DE-OS 30 22 435) ist im allgemeinen ein Druckstück vorgesehen, welches mittels einer Trittplatte mechanisch beaufschlagbar ist und seinerseits über eine stufende Kunststoffeder auf einen Kolben einwirkt, der zur Betätigung des Einlaß- und Auslaßventils des ersten Bremskreises vorgesehen ist. Die Verwendung einer Kunststoffeder allein kann problematisch sein, insbesondere bei Einsatz unter extremen Temperaturbedingungen, da das Verhalten der Stufungsfeder in Abhängigkeit von Temperaturen nicht exakt bestimmbar ist. Bei einem Versagen der Stufungsfeder ist es bei derartigen Fußbremsventilen nicht mehr möglich, in angemessener Weise zu bremsen, d.h. weder der erste Bremskreis noch der zweite Bremskreis können mit dem gegebenenfalls erforderlichen Bremsdruck versorgt werden.

Es sind bereits Fußbremsventile entwickelt worden (DE-OS 24 45 700), bei welchen eine in Reihe befindliche Kombination von Kunststoffeder und herkömmlicher Schraubenfeder zur Anwendung gelangt. Auch bei derartigen Fußbremsventilen besteht das Problem, daß die Kunststoffeder nur in begrenztem Ausmaß hinsichtlich ihrer Stufbarkeit bestimmbar ist und daß bei Ausfall einer der Federn - Kunststoffeder

- 2 -

oder Schraubenfeder – eine ausreichende Funktion des ersten und des zweiten Bremskreises nicht mehr gesichert ist.

Davon ausgehend besteht die Aufgabe der Erfindung darin, ein Druckregelventil, insbesondere Fußbremsventil der gattungsgemäßen Art so auszubilden, daß ein Begrenzungsdruck, d.h. der maximale Bremsdruck am Ausgang, in beiden Kreisen unverändert erreicht werden kann, auch wenn eine Stufungsfeder brechen sollte. Auch soll bei Ausfall eines Kreises mit dem intakten Kreis noch der vorgeschriebene Begrenzungsdruck erreicht werden können. Bei intaktem Gerät soll eine möglichst genaue Druck-Weg-Kraftzuordnung über den ganzen Stufungsbereich, sowohl bei tieferen als auch bei höheren Temperaturen erreichbar sein. Alle diese funktionellen Vorteile sollen in einem Ventil von kurzer Bauweise erreicht werden können.

Zur Lösung dieser Aufgabe dienen die Merkmale nach dem Kennzeichnungsteil des Patentanspruches 1.

Durch die Anordnung der beiden Stufungsfedern, d.h. der inneren und der äußeren Stufungsfeder, welche in Reihe geschaltet sind, wobei die innere Feder vorzugsweise vorgespannt ist, verläuft die Kennlinie des Bremsventils im letzten Abschnitt flacher. Das bringt den Vorteil, daß sich der eingestellte Begrenzungsdruck nur geringfügig ändert, wenn später Veränderungen an den Begrenzungsorganen auftreten oder wenn sich die Stufungsfedern setzen. Ferner läßt sich der Begrenzungsdruck leichter einstellen.

Das Fußbremsventil ist unter nahezu allen Betriebszuständen funktionsfähig, d.h. selbst bei Ausfall eines der Kreise und/oder bei Bruch einer der beiden Stufungsfedern des ersten Kreises.

- 3 -

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert:

| | |
|---|---|
| Figur 1 | ist eine Schnittansicht des erfindungsgemäßen Fußbremsventils; |
| Figur 2 | gibt die Kennlinie des Fußbremsventils bei intaktem Ventil, d.h. den Bremsdruck gegenüber dem Weg am Druckstück, wieder |
| Figur 3 | gibt Kennlinien bei einem Ausfall der inneren Stufungsfeder, der äußeren Stufungsfeder und bei einem Ausfall des ersten Kreises wieder. |

In der Zeichnung ist ein Druckregelventil als zweikreisig wirkendes Fußbremsventil 1 dargestellt. Bei diesem Fußbremsventil wirkt ein (nicht dargestelltes) Bremspedal auf ein Druckstück 3 ein. Das Druckstück 3 stützt sich auf einem Federteller 5 ab und wirkt über eine an der Unterseite des Federtellers 5 angelegte Stufungsfeder 7 auf einen Kolben 9 ein, welcher unter Abdichtung axial verschieblich im Gehäuse 11 des Fußbremsventils 1 geführt ist. Radial innerhalb des Kolbens 9 ist ein Hilfskolben 13 vorgesehen, welcher unter Abdichtung gegenüber dem radial äußeren Kolben 9 geführt ist und unter der Vorspannung einer kleineren Feder 15 steht,wie nachfolgend ausführlich erläutert ist.

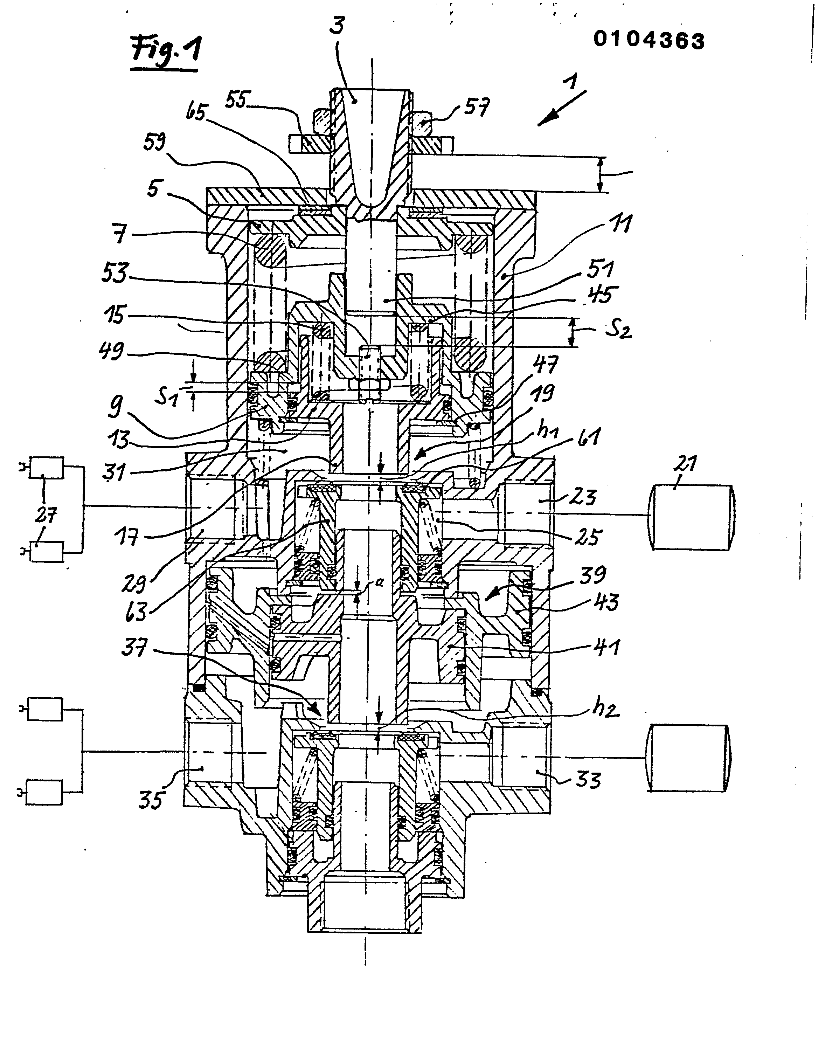

Der Hilfskolben 13 wirkt mittels eines an ihm ausgebildeten Fortsatzes 17 bei nach unten gerichteter Bewegung in bekannter Weise gegenüber einem Einlaß- und Auslaßventil 19 des ersten Kreises, d.h. des ersten Bremskreises des Fußbremsventils. Der Vorrat 21 des ersten Kreises ist mittels eines Anschlußes 23 mit einer Vorratskammer 25 des Fußbremsventils verbunden, während die Bremszylinderanordnung 27 des ersten Kreises mittels des Anschlußes 29 mit der Bremskammer 31 des Fußbremsventils in Verbindung steht. Entsprechende Anschlüsse 33 und 35 sind dem zweiten Kreis des Fußbremsventils zugeordnet und sind an einer Vorrats- bzw. eine Bremszylinderanordnung angeschlossen. Auf das dem zweiten Kreis zugehörige Einlaß- und Auslaßventil 37 wirkt ein sogenannter Wiegekolben 39; der Wiegekolben ist entweder als einteiliger Relaiskolben ausgebildet oder besteht gemäß Ausführungsbeispiel in Fig. 1 aus einem inneren Relaiskolben 41 und einem äußeren Relaiskolben 43.

Der Wiegekolben 39 ist in an sich bekannter Weise von der Druckluft der Bremskammer 31 des ersten Kreises beaufschlagbar, um auf das Einlaß- und Auslaßventil 37 des zweiten Kreises dahingehend einzuwirken, daß der entsprechende Vorrat mit der Bremszylinderanordnung in Verbindung gelangt.

Die dem ersten Bremskreis zugeordnete Federanordnung gemäß der Erfindung, welche aus der äußeren Stufungsfeder 7 und der radial inneren, kleineren und gleichfalls stufenden Feder 15 besteht, ist so aufgebaut, daß die Wirkung des ersten Kreises und demnach auch des zweiten Kreises selbst dann sichergestellt ist, wenn eine der beiden Federn bricht. Wie Fig. 1 der Zeichnung erkennen läßt, stützt sich die innere Feder 15 an einem Ringkörper 45 ab, welcher als Bestandteil des Kolbens 9 anzusehen ist. Somit sind die Stufungsfeder 7 und die Feder 15 in Reihe befindlich angeordnet. Vorzugsweise ist die innere Feder 15 vorgespannt,

wobei der Hilfskolben 13 durch einen in den Innenumfang des Kolbens 9 eingreifenden Sicherungsring 47 oder dergleichen Stützelement gehalten ist. Der Hilfskolben 13 vermag gegenüber dem Kolben 9 eine gemäß Darstellung nach Fig. 1 nach oben gerichtete Relativbewegung zu vollführen. Für die Relativbewegung zwischen Hilfskolben und Kolben steht der Abstand $S_1$ gemäß Fig. 1 zur Verfügung, wobei sich der Hilfskolben an den Anschlag 49 des Kolbens anlegt. In entsprechender Weise ist eine Relativbewegung zwischen dem Druckstück 3 und dem Kolben 9 möglich, da sich eine am Druckstück 3 ausgebildete Verlängerung 51 bzw. ein am Kolben 9 mittig angeordneter Gewindestift 53 um den Abstand $S_2$ relativ zueinander bewegen können, bis sie eine Anschlaglage einnehmen. Am Druckstück 3 ist ein Ring 55 aufgeschraubt und mittels einer Mutter 57 oder dergleichen Sicherungselement in seiner Lage fixierbar. Der Ring 55 dient auf diese Weise als Anschlagelement, d.h. er legt sich bei einer nach unten gerichteten Bewegung des Druckstückes 3 an den die Oberseite des Gehäuses 11 bildenden Gehäusedeckel 59 an.

Der Abstand zwischen dem Ring 55 und dem Gehäusedeckel 59 ist im vorliegenden Ausführungsbeispiel auf den Wert eingestellt $S_F + h_1$/, wobei der Wert $S_F$ der Summe der Federwege $S_{F1}$ und $S_{F2}$ entspricht und $h_1$ den Abstand (im nicht betätigten Zustand) zwischen der Unterkante des Fortsatzes 17 und der Oberkante der Dichtung 61 des Ventilkörpers 63 bildet. $S_{F1}$ ist der Federweg der Stufungsfeder 7 bei maximalem Bremsdruck; entsprechend ist $S_{F2}$ der Federweg der gleichfalls stufenden, in Reihe geschalteten Feder 15 bei maximalem Bremsdruck.

Die Stufungsfeder 7 bildet gemäß der Erfindung zusammen mit der gleichfalls stufenden Feder 15 eine Anordnung, welche auch dann funktionsfähig ist, wenn ein Ausfall einer der beiden Stufungsfedern bzw. einer der Kreise des Fußbremsventils vorliegt. Nachfolgend sind einige Betriebszustände und deren Einfluß auf die Federanordnung bzw. den erzielbaren Druck erläutert.

**Beide Kreise intakt; beide Stufungsfedern in Ordnung:**

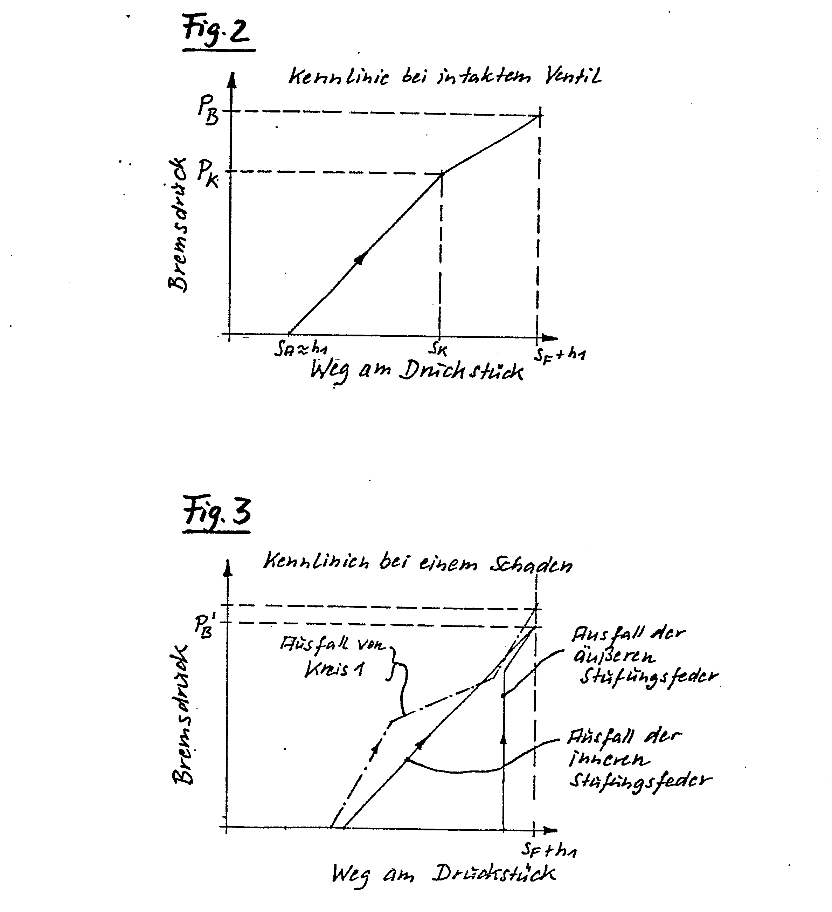

In Fig. 2 ist die Kennlinie des Bremsdruckes in Abhängigkeit des Weges am Druckstück bei intaktem Ventil, also bei intakter Federanordnung wiedergegeben. Bis zum dargestellten Knickpunkt $P_K$ ist nur die äußere Stufungsfeder 7 wirksam. Die Vorspannkraft der inneren Stufungsfeder, also der Feder 15, ist so groß wie die Druckkraft, die am Punkt $P_K$ am Hilfskolben 13 wirkt. Steigt der Druck in der Bremskammer 31 weiter an, dann wird der Hilfskolben 13 gegen die Kraft der Feder 15 verschoben. Der Begrenzungsdruck $P_B$ stellt sich ein, wenn der Weg $S_F + h_1$ durchfahren ist, d.h., wenn der Ring 55 am Gehäusedeckel 59 anliegt. Von der Lösestellung (in Fig. 1 dargestellt) bis zum Endanschlag werden die Stufungsfedern beispielsweise um folgende Federwege zusammengedrückt.

Stufungsfeder 7: $\quad S_{F1} = S_F - S_{F2}$

$$7 = 8,5 - 1,5$$

Feder 15: $\quad S_{F2} < S_1$

$$(1,5 < 2,0)$$

**Beide Kreise intakt; innere Feder 15 ausgefallen:**

Fällt die Feder 15 infolge Federbruches aus, dann wird bei Betätigung des Druckstückes zunächst der Hilfskolben 13 um den Weg $S_1$ verschoben und legt sich an den Anschlag 49 an. Nach diesem Leerweg verläuft die Kennlinie gemäß Fig. 3 mit gleicher Neigung wie nach Fig. 2, jedoch ohne Knick.
Bei einer Vollbremsung wird die Stufungsfeder 7 um den Weg

$$S_{F1} = S_F - S_1$$

$$(6,5 = 8,5 - 2,0)$$

zusammengedrückt, also um den Weg $S_1 - S_{F2}$ (2 - 1,5 = 0,5)
weniger als bei intakter Feder 15.

Da diese Wegminderung relativ klein ist gegenüber dem
gesamten Stufungsweg, verringert sich der maximale Bremsdruck in beiden Kreisen um einen vernachlässigbaren
Wert ($P_B' = 6,8$ bar), also auf 93 % des ursprünglichen
maximalen Druckes.

Beide Kreise intakt; äußere Stufungsfeder 7 ausgefallen:

Wenn der Leerweg $S_2$ (7,5) durchfahren ist, werden beide
Kolben, d.h. der Kolben 9 und der Hilfskolben 13 gemäß
Darstellung in Fig. 1 nach unten verschoben. Es findet
vorerst eine reine Kraftstufung statt. Erst wenn der Druck
in der Bremskammer 31 so groß ist (ca. 5,3 bar), daß der
Hilfskolben 13 gegen die Kraft der Feder 15 verschoben
wird, arbeitet das Ventil mit einer Kraft-Weg-Stufung,
wie aus Fig. 3 zu ersehen ist.

Für den maximal erreichbaren Bremsdruck in beiden Kreisen
ist nur die wirksame Fläche am Hilfskolben 13, die Kraft
der Feder 15 und der Weg $S_2$ (7,5) verantwortlich. Diese
Größen sind vorzugsweise so auszulegen, daß der gleiche
Enddruck wie bei Ausfall der inneren Feder erreicht wird,
d.h. ca. 6,8 bar.

$S_2$ ist etwas größer als der größte Federweg $S_{F1}$ der Stufungsfeder 7:

$$S_2 > S_{F1}$$

$$(7,5 > 7,0)$$

- 8 -

8

Der Abstand $S_2$ ist durch den Gewindestift 53 von unten einstellbar. Die Kraft am Druckstück 3 ist nicht reduziert, da der Druck in der Bremskammer 31 auch den Kolben 9 beaufschlagt.

<u>Ausfall von Kreis 2:</u>

Ist z.B. der Vorratsdruck des zweiten Kreises ausgefallen, beträgt also O bar, dann ist die Funktion des ersten Kreises hiervon nicht beeinflußt.

<u>Ausfall von Kreis 1:</u>

Ist z.B. der Vorratsdruck des Kreises 1 ausgefallen, beträgt er also O bar, dann fällt die Ansteuerung der Relaiskolben 41 und 43 durch Druckluft fort. Sind der Auslaßhub des ersten Kreises entsprechend dem Abstand $h_1$, das Spiel a und der Auslaßhub des zweiten Kreises entsprechend $h_2$ überwunden, dann wird der zweite Kreis in bekannter Weise mechanisch über den inneren Relaiskolben in Funktion gesetzt. Hierbei behält der äußere Relaiskolben, welcher als Ringkolben ausgebildet ist, seine Lage unverändert bei. Der Durchmesser des inneren Relaiskolbens 41 wird vorzugsweise so gewählt, daß bei einer Vollbremsung der gleiche maximale Bremsdruck im zweiten Kreis erreicht wird wie bei intaktem Ventil. Der Leerweg am Druckstück 3 wird um das Spiel a und den Auslaßhub $h_2$ vergrößert (Kennlinienverlauf in Fig. 3). Natürlich kann in bekannter Weise auf den äußeren Relaiskolben verzichtet werden. Es ist auch möglich, bei dem in Fig. 1 dargestellten Fußbremsventil eine sogenannte Gleichlauf-Einrichtung an sich bekannter Konstruktion vorzusehen.

Knorr-Bremse GmbH
Moosacher Str. 80
8000 München 40

München, den 23.08.1982
TP1-hn/fe
- 1719 -

P a t e n t a n s p r ü c h e

1. Druckregelventil, insbesondere Fußbremsventil für Kraftfahrzeuge, mit wenigstens zwei Kreisen, einem zur Betätigung des Einlaß- und Auslaßventils des ersten Kreises dienenden, mechanisch beaufschlagbaren Druckstück, welches über eine wenigstens zwei Federn aufweisende, in Reihenschaltung befindliche Federanordnung auf das Einlaß- und Auslaßventil des ersten Kreises einwirkt, dadurch gekennzeichnet, daß die Federanordnung aus in Reihe geschalteten Stufungsfedern (7; 15) besteht, von welchen sich die eine Stufungsfeder (7), radial außerhalb der zweiten Stufungsfeder (15) befindlich, einerseits am Druckstück (3) und andererseits an einem Kolben (9) abstützt, und daß sich die zweite Stufungsfeder unter Vorspannung einerseits am Kolben (9) und andererseits an einem das Einlaß- und Auslaßventil (19) beaufschlagenden Hilfskolben (13) abstützt, welcher radial innerhalb des ringförmigen Kolbens (9) geführt ist.

2. Druckregelventil nach Anspruch 1, dadurch gekennzeichnet, daß die Stufungsfedern als Schraubenfedern ausgebildet sind.

3. Druckregelventil nach Anspruch 1, dadurch gekennzeichnet, daß sich das dem Gehäusedeckel (59) des Fußbremsventils zugewandte Ende der äußeren Stufungsfeder (7) an einem vom Druckstück (3) beaufschlagten Federteller (5) abstützt, während das entgegengesetzte Ende auf der zugewandten Seite des ringförmigen Kolbens (9) abgestützt ist, und daß sich die

- 2 -

innere Stufungsfeder (Feder 15) - radial innerhalb der äußeren Stufungsfeder befindlich - mit einem Ende an der vom Gehäusedeckel (59) abgewandten Seite des Kolbens (9) und mit dem entgegengesetzten Ende an der dem Kolben (9) zugewandten Innenfläche des Hilfskolbens (13) abstützt.

4. Druckregelventil nach Anspruch 1 oder 3, dadurch gekennzeichnet, daß die innere Stufungsfeder (Feder 15) zwischen dem Kolben (9) und dem Hilfskolben (13) vorgespannt ist, wobei der Hilfskolben mittels eines Sicherungsringes (47) am Kolben (9) abgefangen ist.

5. Druckregelventil nach einem der vorangehenden Ansprüche, dadurch gekennzeichnet, daß das dem Einlaß- und Auslaßventil (19) zugewandte Ende des Druckstückes (3) im entlasteten Zustand der Federanordnung einen einstellbaren Abstand gegenüber dem das Ende des Druckstückes führend aufnehmenden Mittelteil des Kolbens (9) aufweist, derart, daß sich das Druckstück bei einem Bruch der äußeren Stufungsfeder an den Kolben (9) anzulegen vermag, und daß der Hilfskolben (13) in seiner vorgespannten Lage am Sicherungsring (47) einen vorbestimmten Abstand gegenüber dem Kolben (9) besitzt, derart, daß sich der Hilfskolben bei einem Bruch der inneren Stufungsfeder in Richtung des Gehäusedeckels (59) an den ihn aufnehmenden Kolben (9) anzulegen vermag.

6. Druckregelventil nach einem der vorangehenden Ansprüche, dadurch gekennzeichnet, daß das Druckstück einen Ring trägt, welcher sich zum Zwecke der Druckbegrenzung bei Betätigung des Druckstückes an der zugewandten Oberfläche des Gehäusedeckels anzulegen vermag.

7. Druckregelventil nach einem der vorangehenden Ansprüche, dadurch gekennzeichnet, daß der Abstand zwischen Ring und Gehäusedeckel einstellbar ist.

- 3 -

8. Druckregelventil nach einem der vorangehenden Ansprüche, gekennzeichnet durch zur genauen Einstellung des Ansprechweges dienende Distanzscheiben (65), welche zwischen der Oberseite des Federtellers (5) und der Unterseite des Gehäusedeckels (59) einlegbar sind.

9. Druckregelventil nach einem der vorangehenden Ansprüche, dadurch gekennzeichnet, daß der Mittelteil des Kolbens (9) einen axial sich erstreckenden Gewindestift (53) trägt, dessen Abstandsposition gegenüber dem Ende des im Mittelteil geführten Druckstückes einstellbar ist.

Fig.1

0104363

## Fig. 2

Kennlinie bei intaktem Ventil

Bremsdruck (vertical axis)

$P_B$

$P_K$

$S_A \approx h_1$   $S_K$   $S_F + h_1$

Weg am Druckstück

## Fig. 3

Kennlinich bei einem Schaden

Bremsdruck (vertical axis)

$P_B'$

Ausfall von Kreis 1

Ausfall der äußeren Stützungsfeder

Ausfall der inneren Stützungsfeder

$S_F + h_1$

Weg am Druckstück

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,A | DE-B-2 716 495   (WABCO WESTINGHOUSE) * Ansprüche 1, 3; Figur 1 * | 1-9 | B 60 T   15/04 |
| Y,A | DE-B-1 120 294   (KNORR-BREMSE) * Anspruch 1; Figur * | 1-4 | |
| D,A | DE-A-3 022 435   (KNORR-BREMSE) | | |
| D,A | DE-A-2 445 700   (WABCO WESTINGHOUSE) | | |

|  |  |
|---|---|
| | RECHERCHIERTE SACHGEBIETE (Int. Cl. ³) |
| | B 60 T   15/00 |

Der vorliegende Recherchenbericht wurde für alle Patentansprüche erstellt.

| Recherchenort | Abschlußdatum der Recherche | Prüfer |
|---|---|---|
| BERLIN | 29-11-1983 | LUDWIG H J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82